Europäisches Patentamt

European Patent Office

Office européen des brevets

(19)

(11) Numéro de publication: **0 009 711**
**B1**

(12) **FASCICULE DE BREVET EUROPEEN**

(45) Date de publication du fascicule de brevet: **13.05.81**

(21) Numéro de dépôt: **79103491.1**

(22) Date de dépôt: **17.09.79**

(51) Int. Cl.³: **B 65 G 59/06**

(54) Distributeur automatique d'objets empilés.

(30) Priorité: **22.09.78 FR 7827189**

(43) Date de publication de la demande:
**16.04.80 Bulletin 80/8**

(45) Mention de la délivrance du brevet:
**13.05.81 Bulletin 81/19**

(84) Etats Contractants Désignés:
**AT BE CH DE FR GB IT LU NL SE**

(56) Documents cités:
**FR - A - 1 591 038**
**FR - A - 2 210 181**
**FR - A - 2 337 676**

(73) Titulaire: **Guigan, Jean**
**9, rue Jean Mermoz**
**F-75008 Paris (FR)**

(72) Inventeur: **Guigan, Jean**
**9, rue Jean Mermoz**
**F-75008 Paris (FR)**

(74) Mandataire: **Weinmiller, Jürgen et al,**
**Zeppelinstrasse 63**
**D-8000 München 80 (DE)**

Courier Press, Leamington Spa, England.

## Distributeur automatique d'objets empilés

La présente invention a pour objet un distributeur automatique d'objets empilés.

On connait des distributeurs automatiques, par exemple pour feuilles de papier, comportant
— des moyens de guidage pour guider une pile des objets à distribuer,
— une roue d'entraînement tournant autour d'un axe de rotation et disposée en regard d'un bout de cette pile de manière à pouvoir entrer en contact avec l'objet situé en bout de pile, des moyens étant prévus pour assurer le déplacement de la pile vers cette roue,
— un moteur pour entraîner cette roue en rotation,
— et un dispositif d'écartement commandable à deux états pour permettre tantôt, dans un état actif, d'écarter la pile de la roue d'entraînement de manière à empêcher le contact entre cette roue et ledit objet situé en bout de pile et tantôt, dans un état passif, de mettre en contact cette roue et cet objet de manière que cette roue entraîne cet objet et le fasse sortir de cette pile,

La pile est souvent verticale et la roue d'entraînement est disposée au dessus de la pile sur laquelle elle vient s'appuyer sous l'action de moyens de commande automatiques. De tels distributeurs sont bien adaptés à la distribution à grande vitesse de feuilles de papier toujours identiques pour alimenter une machine de reproduction. Mais ils sont relativement couteux, notamment en raison de la nécessité de déplacer vers le bas l'axe de rotation de la roue d'entraînement. On connait d'autre part, par la demande de brevet français No 2 117 742 déposée le 15 Decembre 1971 pour "Dispositif de distribution d'objets à la sortie d'un stock dynamique," un distributeur pour des objets relativement épais et rigides tels que des boîtes parallélépipédiques. Dans ce dispositif l'objet situé au bas d'un pile inclinée est soulevé perpendiculairement à l'axe de la pile, par un boudin gonflable sur commande, pour lui faire franchir une butée fixe au bas de la pile. Il est alors souhaitable de disposer la plus grande longueur de l'objet selon l'axe de la pile, ce qui conduit à donner à celle ci une grande longueur, l'encombrement du distributeur étant alors excessif s'il doit être situé dans un local accessible au public.

La présente invention a pour but la réalisation d'un distributeur automatique d'objets empilés de fabrication et de fontionnement particulièrement simples, et applicable notamment à la distribution de médicaments en boîtes parallélépipédiques.

Elle a pour objet un distributeur automatique d'objets empilés comportant
— des moyens de guidage pour guider une pile des objets à distribuer,
— un dispositif d'éjection tournant autour d'un axe de rotation et disposée en regard d'un bout de cette pile de manière à pouvoir entrer en contact avec l'objet situé en bout de pile,
— des moyens pour assurer le déplacement de la pile vers ce dispositif,
— un moteur pour entraîner ce dispositif en rotation,
— et un dispositif d'écartement commandable à deux états pour permettre fantôt, dans un état actif, d'écarter la pile du dispositif d'éjection de manière à empêcher le contact entre ce dispositif et ledit objet situé en bout de pile et tantôt, dans un état passif, de mettre en contact ce dispositif et cet objet de manière que ce dispositif entraîne cet objet et le fasse sortir de cette pile,
caractérisé par le fait que le dispositif d'éjection est constitué par une came d'éjection avec un arc actif situé à une distance de l'axe de rotation plus grande que celle d'une zone passive formée par le reste de ce contour,
— une butée étant prévue pour limiter le déplacement de la pile vers la came d'éjection lorsque le dispositif d'écartement est dans un état passif de manière à empêcher le contact dudit objet en bout de pile avec ladite zone passive tout en permettant le contact de cet objet avec l'arc actif,
— ledit dispositif d'écartement étant pourvu d'un dispositif d'inhibition synchronisé avec la rotation de la came d'éjection de manière à l'empêcher de changer d'état lorsque l'arc actif est au contact dudit objet en bout de pile.

A l'aide des figures schématiques 1 et 2 ci-jointes, on va décrire ci après, un example de réalisation du distributeur selon l'invention. Lorsqu'un même élément est représenté sur les deux figures il y est désigné par le même signe de référence.

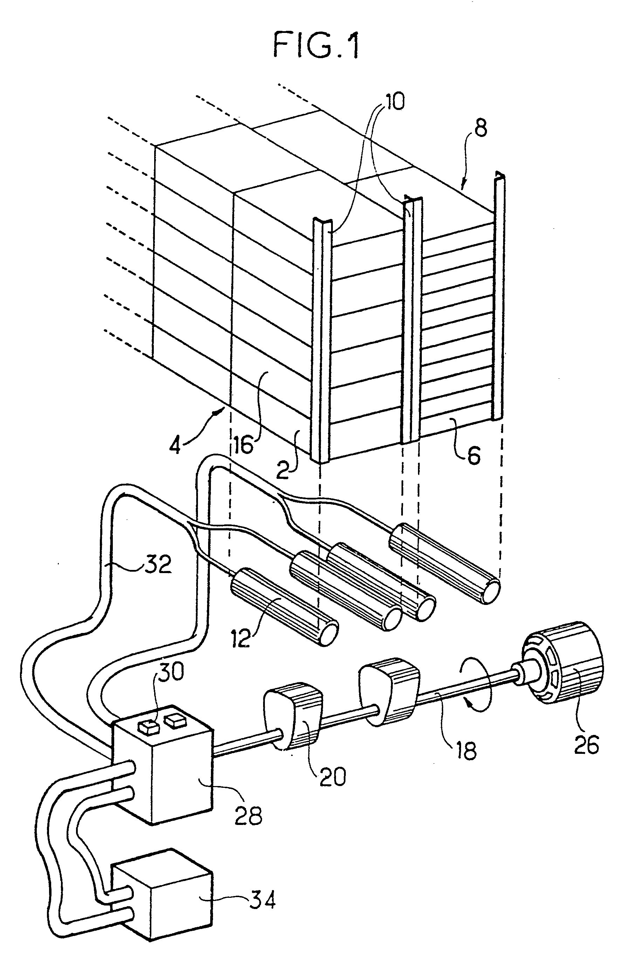

La figure 1 représente une vue en perspective de ce distributeur,

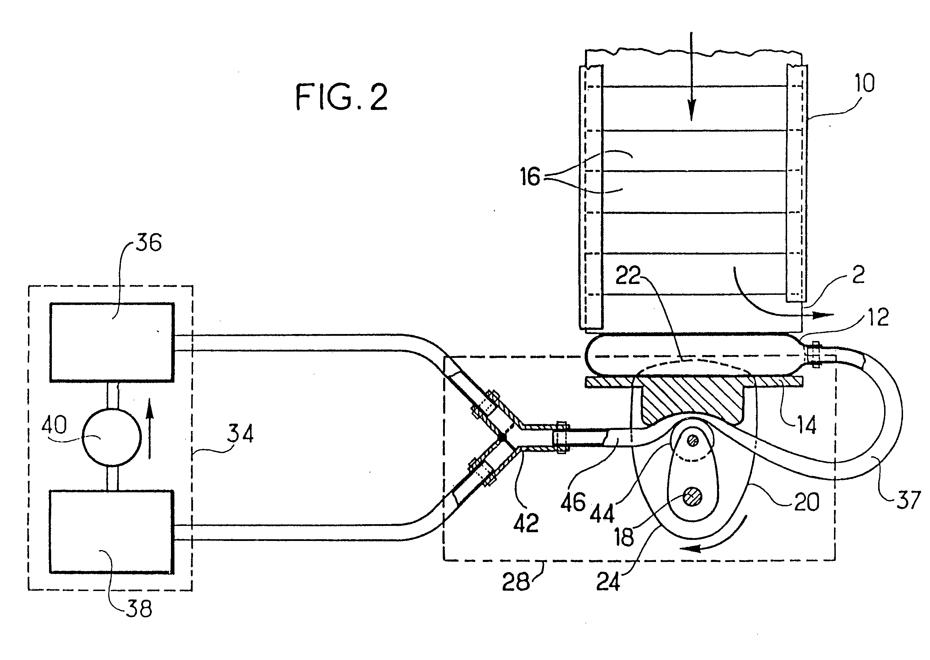

La figure 2 représente une vue en coupe de ce même distributeur.

Le distributeur comporte deux piles verticales de boîtes parallélépipédiques. Les boîtes telles que 2 de la pile 4 sont identiques entre elles en dimensions et en contenu.

Celles, telles que 6, de la pile 8, sont aussi identiques entre elles, mais elles différent de celles de la pile 4 par leur contenu et leur hauteur.

Chacune de ces piles est pourvue de mêmes moyens mécaniques qui vont être décrits pour la seule pile 4, Celle-ci est guidée par des glissières ou moyen de guidage 10 et soutenue par deux enceintes déformables latérales telles que des boudins gonflables 12 qui sont disposés sur un appui 14 et sous la boîte telle que 2 située au bas de la pile. Ces enceintes constituent un dispositif d'écartement. Lorsque celui-ci est actif c'est à dire lorsque les boudins sont gonflés, la pile 4 et la boîte 2 sont dans une position "haute" telle que le bas de la glissière 10 empêche la boîte 2 de s'échapper vers l'avant.

Lorsque ces boudins sont "passifs" c'est à dire dégonflés, la boîte 2 peut s'échapper vers l'avant, mais la boîte 16 située immédiatement au dessus ne le peut pas.

Sous la pile est disposé un dispositif d'éjection 20 en forme de came, qui comporte un arc actif 22 revêtu d'un matériau à fort coefficient de frottement tel que du caoutchouc strié. Cet arc actif forme saillie c'est à dire qu'il est situé à une distance de l'axe 18 de la roue plus grande que celle du reste du contour de la came, qui constitue une zone passive 24. Cet axe est horizontal et transversal et il entraîne la came en rotation continue sous l'action d'un moteur 26.

L'arc actif 22 passe au dessous de la boîte inférieure 2 sans la toucher lorsque les boudins 12 sont gonflés. Lorsqu'ils sont dégonflés, la zone passive ne peut toujours pas toucher la boîte, mais l'arc actif vient en contact de celle-ci lorsqu'il est orienté vers le haut, et, par frottement avec celle-ci, l'éjecte vers l'avant de manière à permettre à un acheteur ou utilisateur de la prendre. Bien entendu la roue 20 pourrait comporter non pas un seul mais plusieurs arcs actifs. Il est cependant important que ces arcs soient séparés par des zones passives dont chacune permet, lorsque les boudins sont maintenus dégonflés, à la pile de boîte de redescendre entre les passages de deux arcs actifs successifs, ou entre deux passages successifs de l'arc actif unique.

Il est d'autre part utile que le changement d'état de dispositif d'écartement se fasse complètement entre deux tels passages successifs. C'est pourquoi le dispositif d'écartement est pourvu d'un dispositif d'inhibition qui est synchronisé sur la rotation de l'axe 18 et qui empêche le changement d'état lorsque l'arc actif 22 est en contact avec la boîte 2. Le dispositif de commande est souvent constitué par des circuits électroniques du type "microprocessor." Un mode de réalisation mécanique va être décrit dont les relations fonctionnelles sont transposables à un mode de réalisation électronique.

Le dispositif d'inhibition est constitué par une came 44 qui tourne autour de l'axe 18 et écrase un tuyau souple 46 tant que la position de l'arc actif 22 permet le contact avec la boîte 2, ce tuyau souple assurant la connection entre la vanne 42 et le conduit 32.

Les dispositifs de commande et d'inhibition sont contenus dans un boîtier 28 qui reçoit une extrémité de l'axe 18 et qui comporte autant de manettes de commande telles que 30 qu'il y a de piles telles que 4. Ce boîtier alimente les boudins 12 en huile sous pression pour les gonfler, et évacue l'huile pour les dégonfler, ceci par des conduits 32. Il est lui même alimenté par une source de fluide sous pression 34 comportant un réservoir d'huile sous pression 36, un réservoir d'huile à basse pression 38, et un compresseur 40 alimentant le réservoir 36 à partir du réservoir 38. L'huile est transmise du réservoir 36 au conduit 32, ou de ce conduit au réservoir 38, par une vanne à deux voies 42 disposée dans le boîtier 28 et commandée par la manette 30.

Des moyens de limitation de nombre non représentés peuvent avantageusement être disposés fonctionnellement entre la manette 30 et la vanne 42 de manière à regonfler les boudins 12 dès qu'un nombre de boîtes sélectionné à été atteint et à éviter ainsi à un utilisateur peu attentif de se faire délivrer plus de boîtes qu'il ne le souhaite.

L'invention n'est pas limitée à l'exemple de réalisation décrit ci-dessus. On peut adapter ce distributeur dans le cadre de l'invention à une pile horizontale dont le déplacement des objets vers le bout de la pile n'est plus assuré par la pesanteur mais par des moyens mécanique appropriés.

**Revendications**

1. Distributeur automatique d'objets empilés comportant
— des moyens de guidage (10) pour guider une pile (8) des objets (6) à distribuer,
— un dispositif d'éjection tournant autour d'un axe (18) de rotation et disposé en regard d'un bout de cette pile de manière à pouvoir entrer en contact avec l'objet (6) situé en bout de pile,
— des moyens pour assurer le déplacement de la pile vers ce dispositif,
— un moteur (26) pour entraîner ce dispositif en rotation,
— et un dispositif d'écartement commandable à deux états pour permettre tantôt, dans un état actif, d'écarter la pile du dispositif d'éjection de manière à empêcher le contact entre ce dispositif et ledit objet situé en bout de pile et tantôt, dans un état passif, de mettre en contact ce dispositif et cet objet de manière que ce dispositif entraîne cet objet et le fasse sortir de cette pile,
— caractérisé par le fait que le dispositif d'éjection est constitué par une came d'éjection (20) avec un arc actif (22) situé à une distance de l'axe de rotation plus grande que cell d'une zone passive (24) formée par le reste de ce contour,
— une butée étant prévue pour limiter le déplacement de la pile vers la came d'éjection lorsque le dispositif d'écartement est dans son état passif de manière à empêcher le contact dudit objet en bout de pile avec ladite zone passive tout en permettant le contact de cet objet avec l'arc actif,
— ledit dispositif d'écartement étant pourvu d'un dispositif d'inhibition (44) synchronisé ave la rotation de la came d'éjection de manière à l'empêcher de changer d'état lorsque l'arc actif est au contact dudit objet en bout de pile.

2. Distributeur selon la revendication 1, caractérisé par le fait que ledit dispositif d'écartement comporte au moins une enceinte (12) déformable disposée entre un appui et ledit objet en bout de pile,

— une source de fluide sous pression (34),

— un conduit pour amener le fluide de ladite source à ladite enceinte de manière à la dilater, et à écarter la pile (8) de la came d'éjection (20),

— et un dispositif de commande (3) pour mettre ce conduit tantôt en communication avec cette source, ce qui met ces moyens d'écartement dans leur état actif, et tantôt en communication avec une zone à basse pression, ce quie permet au fluide de s'échapper de l'enceinte déformable et met ces moyens d'écartement dans leur état passif.

3. Distributeur selon la revendication 2, caractérisé par le fait que ladite enceinte déformable (12) est constituée par des boudins gonflables.

4. Distributeur selon l'une des revendications 1 à 3, caractérisé par le fait que des moyens de guidage sont disposés verticalement de manière que la pesanteur assure le déplacement de la pile vers la came d'éjection (20).

5. Distributeur selon l'une des revendications 1 à 4 caractérisé par le fait qu'il comporte

— des moyens de guidage (10) pour plusieurs piles parallèles (4, 8),

— plusieurs cames d'éjection (20) disposées sur un même axe de rotation (18), chacune de ces roues étant disposées en regard d'un bout d'une de ces piles

— et plusieurs dispositifs d'écartement (12) agissant chacun sur l'une de ces piles et pourvus chacun d'un dispositif de commande distinct.

## Claims

1. An automatic dispensing machine for dispensing stacked objects, said machine including:

— guide means (10) for guiding a stack (8) of objects (6) to be dispensed,

— an ejector device which rotates on an axis (18) of rotation and is disposed facing one end of this stack so as to be able to come into contact with the object (6) situated at the end of the stack,

— means for moving the stack towards the ejector device,

— a motor (26) for rotating this ejector device,

— and a controlled spacer device which can be in either one of two states, one of which is an active state in which the stack is moved away from the ejector device so as to prevent contact between the ejector device and said object situated at the end of the stack and the other of which is a passive state in which the ejector device comes into contact with said object so that the ejector device drives said object and lets it leave the stack, characterized in that the ejector device is constituted by an ejector cam (20) with an active arc (22) situated at a greater distance from the axis of rotation than a passive zone (24) formed by the remainder of the periphery,

— a stop being provided to limit the movement of the stack towards the ejector cam when the spacer device is in its passive state, so as to prevent contact between said object at the end of the stack and said passive zone while allowing contact between the object and the active arc, and

— said spacer device being provided with an inhibition device (44) synchronized with the rotation of the ejector cam so as to prevent it from changing state when the active arc is in contact with said object at the end of the stack.

2. A dispensing machine according to claim 1, characterized in that said spacer device includes at least one deformable chamber (12) disposed between a support plate and said object at the end of the stack,

— a pressurized fluid source (34),

— a pipe for bringing the fluid from said source to said chamber so as to inflate it and to move the stack (8) away from the ejector cam (20),

— and a control device (30) to make the pipe communicate with either the source, thus putting the spacer means in their active state, or a low-pressure zone, thus allowing the fluid to escape from the deformable chamber and putting the spacer means in their passive state.

3. A dispensing machine according to claim 2, characterized in that said deformable chamber (12) is constituted by inflatable bladders.

4. A dispensing machine according to one of the claims 1 to 3, characterized in that guide means are disposed vertically so that the stack is moved by gravity towards the ejector cam (20).

5. A dispensing machine according to one of the claims 1 to 4, characterized in that it includes:

— guide means (10) for several parallel stacks (4, 8),

— several ejector cams (20) disposed on the same axis (18) of rotation, each of the cams being disposed facing one end of the stacks,

— and several spacer devices (12), each coming into operation on one of these stacks and each provided with an individual control device.

## Patentansprüche

1. Ausgabeautomat für gestapelte Gegenstände mit

— Führungsmitteln (10) zur Führung eines Stapels (8) auszugebender Gegenstände (6).

— einer Auswurfvorrichtung, die sich um eine Drehachse (18) dreht und derart gegenüber einem Ende des Stapels angeordnet ist, daß sie mit dem Gegenstand (6) am Ende des Stapels in Berührung treten kann.

— Mitteln für die Verschiebung des Stapels in Richtung dieser Vorrichtung,

— einem Motor (26), um diese Vorrichtung in Drehung zu versetzen,

— und einer steuerbaren Abstandsvorrichtung mit zwei Zuständen, um einmal, im aktiven Zustand, den Stapel von der Auswurfvorrichtung fernzuhalten und so den Kontakt zwischen dieser Vorrichtung und dem Gegenstand am Ende des Stapels zu verhindern, und um zum anderen, im passiven Zustand, diese Vorrichtung und diesen Gegenstand in Kontakt zu bringen, damit die Vorrichtung den Gegenstand antreibt und aus dem Stapel herausstößt, dadurch gekennzeichnet, daß die Auswurfvorrichtung aus einer Auswurfnocke (20) mit einem aktiven Bogen (22) besteht, der eine größere Entfernung von der Drehachse aufweist als eine passive Zone (24), die vom Rest dieses Umrisses gebildet wird,

— wobei ein Anschlag zur Begrenzung der Verschiebung des Stapels in Richtung der Auswurfnocke vorgesehen ist, wenn die Auswurfvorrichtung sich in ihrem passiven Zustand befindet, so daß der Kontakt zwischen dem Gegenstand am Ende des Stapels und der passiven Zone verhindert, jedoch der Kontakt zwischen diesem Gegenstand und dem aktiven Bogen ermöglicht wird.

— wobei dei Auswurfvorrichtung mit einer Hemmvorrichtung (44) ausgerüstet ist, die mit der Rotation der Auswurfnocke synchronisiert ist, um eine Zustandsänderung der Auswurf vorrichtung zu verhindern, solange der aktive Bogen mit dem Gegenstand am Ende des Stapels in Berührung steht.

2. Ausgabeautomat nach Anspruch 1, dadurch gekennzeichnet, daß die Abstandsvorrichtung mindestens eine verformbare Kammer (12) zwischen einer Auflageplatte und dem Gegenstand am Ende des Stapels,

— eine Quelle für eine unter Druck stehende Flüssigkeit (34),

— eine Leitung, durch die die Flüssigkeit von der Quelle zur Kammer geleitet wird, um diese aufzublasen und den Stapel (8) von der Auswurfnocke (20) zu entfernen,

— und eine Steuervorrichtung (30) aufweist, um die Leitung einmal mit der Quell in Verbindung zu bringen, wodurch die Abstandsmittel in ihren aktiven Zustand versetzt werden, und ein anderes mal mit einer Zone niedrigen Drucks zu verbinden, wodurch die Flüssigkeit aus der verformbaren Kammer entweichen kann und die Abstandsmittel in ihren passiven Zustand versetzt werden.

3. Ausgabeautomat nach Anspruch 2, dadurch gekennzeichnet, daß die verformbare Kammer (12) aus aufblasbaren Wülsten besteht.

4. Ausgabeautomat nach einem der Ansprüche 1 bis 3, dadurch gekennzeichnet, daß die Führungsmittel senkrecht angeordnet sind, so daß die Schwerkraft die Verschiebung des Stapels in Richtung der Auswurfnocke (20) bewirkt.

5. Ausgabeautomat nach einem der Ansprüche 1 bis 4, dadurch gekennzeichnet, daß er

— Führungsmittel (10) für mehrere parallele Stapel (4, 8),

— mehrere Auswurfnocken (20), die auf der gleichen Drehachse (18) angeordnet sind, wobei jedes dieser Räder gegenüber einem Ende eines dieser Stapel angeordnet ist,

— und mehrere Abstandsvorrichtungen (12) aufweist, von denen jede auf einen dieser Stapel einwirkt und jede eine eigene Steuervorrichtung aufweist.

# FIG.1

FIG. 2